# EUROPEAN PATENT APPLICATION

(11) **EP 4 059 330 A1**
(43) Date of publication of application: **21.09.2022**
(21) Application number: 20887082.4
(22) Date of filing: 06.11.2020
(51) Int. Cl.: A01B 15/16, A01B 23/06

(54) **AGRICULTURAL DISC AND METHOD FOR MANUFACTURING AN AGRICULTURAL DISC FOR USE IN AGRICULTURAL WORK**

(30) Priority: 14.11.2019 ES 201930995; 21.10.2020 ES 202031060
(71) Applicant: Bellota Agrisolutions, S.L., 20230 Legazpia (Guipúzcoa) (ES)
(72) Inventor: LAVIGNE, Patrick Eugene, Beamsville, Ontario (CA); BENT, Ethan Curtis Stephen, Hamilton, Ontario (CA)
(74) Representative: Ungria López, Javier
(86) International application number: PCT/ES2020/070684
(87) International publication number: WO 2021/094634

(57) **Abstract**

This invention relates to an agricultural disc (1) for use in agricultural work, such as to open furrows in the soil for sowing or to prepare the land for tillage and grinding, comprising two surfaces (8, 9), a cutting circular perimeter edge (11) and a plurality of notches (2) located on a first surface (9) of said agricultural disc (1), distributed in a circular matrix shape concentric to the agricultural disc (1), located adjacent to the perimeter edge (11). The invention also comprises the process for manufacturing the agricultural disc (1) comprising a step of creating a plurality of undulations (4) in a circular disc (20) and a step of shaving or straightening via machining the crests generated on a second surface (8) when the undulations (4) are generated.

## Description

### OBJECT OF THE INVENTION AND TECHNICAL FIELD

The present invention relates to a disc for use in agricultural work, with notches on at least one of the sides thereof, as well as to the process for manufacturing said agricultural disc.

The present invention falls within the field of devices, apparatuses and assemblies used in activities related to agricultural production and agriculture, and more particularly, the invention relates to a disc which is preferably used as an agricultural disc or for an agricultural machine.

### BACKGROUND OF THE INVENTION

Currently, there are many agricultural tools known in the state of the art on the market, some of them being disc tools configured to work the soil in agriculture, mainly for clearing, turning, aerating, clearing and cutting waste or penetrating the terrain, opening furrows, facilitating the subsequent use thereof to be cultivated.

Because of this, the existence of a variety of shapes, diameters and materials which provide the different functional features of the discs are common knowledge among those who are familiar with agricultural techniques. Therefore, said shapes, sizes and materials are generally adjusted, to a greater or lesser extent, to the different terrain conditions wherein said discs can work, as well as to the machines to which they are connected.

Among the discs designed to be used in agricultural work, those known as tillage or clearing discs stand out, which normally have concave curves, and are configured to perform tasks such as clearing soil, removing, cutting and aerating waste from harvest, and those known as furrow openers, which are normally flat and are configured to make the hole for sowing or harvesting, making cracks in the plot, having a somewhat larger size, in general, than those for clearing.

Furrow opener discs are generally connected to a calibration wheel that may be in tight contact, or displaced with respect to the disc, having a different axis of rotation with respect to the axis of rotation of the disc.

These calibration wheels establish a point of reference for the surface of the soil, from which the spacing of the disc can be set to obtain the desired shape and depth of the seed furrow. In fact, the calibration wheel is normally in close contact with the face of the disc, on the perimeter edge, in order to help scrape off the waste dragged by the disc. Furthermore, the calibration wheel does not necessarily have the same diameter as the furrow opener disc, for which reason the disc and the calibration wheel can rotate at different frequencies.

A scraper can be placed on one side of the disc, which in the sowing equipment can also function as a seed cover, where the measured product, in other words, the seeds, fertilisers, etc., are dropped on the soil opened by the disc. To do so, said scraper is configured to always be in contact with the disc, and both are configured such that they are able to be used in a collaborative manner.

Since the main objective of a furrow opener disc is to efficiently cut and penetrate the terrain, the leading edge thereof must be aggressive and sharp enough to be inserted into the terrain and ensure that it breaks the ground efficiently, and strong enough to prevent rapid deterioration or wear. In fact, this cutting process is fundamental for correct sowing and for the crop to emerge uniformly, which is essential when maximum productivity is desired when it is harvested.

One of the problems that affect these discs is that, depending on the conditions of the terrain, the discs slide on the ground instead of rotating. This is due to the fact that, currently, new agricultural practices are aimed at increasing the work speed and planting in uncultivated land (zero tillage). As the speeds of the discs are increased, the sharp edges begin to slide in the trench causing mud to smear on the side wall of the discs. In zero-tillage applications, the waste is pushed in front of the blades instead of being cut, which causes the debris to be blocked and stuck.

To reduce these slippage problems, the discs are often provided with an undulated perimeter edge and even with a plurality of symmetrical teeth or slots which are evenly distributed on the perimeter thereof, which facilitate the process of opening the furrow in the terrain.

For use, the undulations of the discs are placed on the soil such that as the disc rotates, it moves longitudinally, such that the undulation, tooth, or slot of the disc is inserted into the soil, generating an undulation fissure, which is straight or at an angle with respect to the vertical.

Moreover, the discs used to clear the terrain are also introduced into the soil are usually assembled in harrows, and in addition to cutting the excess material, they drag the earth which enables all the remaining plant waste still in it to be ground, with the wear entailed in said discs.

Practice has shown that the continuous work and the aggressiveness of the terrain against the sharp edge of a disc causes a progressive wear of the perimeter thereof, and in the case of having a grooved, toothed, slotted or undulated profile, the wear is greater when the tensions in the grooves or teeth present are accumulated, gradually losing the effectiveness thereof when penetrating, removing and cutting the ground.

These defects or problems affect the discs that need to work with high precision, the uniformity of the assemblies and discs thereof being of utmost importance.

For this reason, and having detected these drawbacks, a disc for farming, clearing, sowing and/or opening the terrain is necessary, the features of which enable wear or deterioration, which can reduce performance during use, to be minimised, as well as having a configuration which enables a clean and regular execution, facilitating the rotation of the disc and preventing it from slipping, both at low and high speeds.

### DESCRIPTION OF THE INVENTION

Based on the aforementioned background, the object of the invention is to provide an agricultural disc with notches in the edge, which is extremely precise and durable, enabling it to be used in agricultural work, such as penetrating and breaking the terrain or clearing and tilling farmland, without the disc sliding, such that the efficiency thereof is not excessively altered by wear.

Said discs are configured to be assembled to different structures for tillage, sowing and fertilising, in the same manner as conventional discs, in other words, without requiring special adaptations or special training for the user installing it, in machines that are currently in use.

In this manner, the invention consists of an agricultural disc for agricultural work, comprising two surfaces and a cutting circular perimeter edge.

A first plurality of concave notches is located on a first surface of said agricultural disc, said notches spaced by smooth separations located in the perimeter edge. The notches are distributed in the shape of a circular matrix concentric to the disc, said notches being adjacent or right next to the perimeter edge. In other words, between one notch and another there is a smooth separation, not bulging or being curved in the way that the notches are with respect to the rest of the disc.

These notches are small curved hollows made on the first surface of the disc, preferably all the notches being the same, in other words, they have the same shape and size, apart from all the notches needing to always have the same distribution and orientation with respect to the centre of the agricultural disc in order for it to be used properly.

Regardless of the type of curved shape of the notches, they are located touching the perimeter edge, such that at the intersection between said notches and the agricultural disc, an undulated contour can be found on the edge of the latter.

In one embodiment, the agricultural disc is flat, the two surfaces being flat and parallel, said agricultural disc being configured to open furrows in soil. In other words, once the soil is prepared, this type of disc is used to make furrows wherein the seeds and/or fertiliser are inserted.

In this manner, since the notches are located on the first flat surface, next to the perimeter edge of the disc, they enable a greater grip of the disc on the farmland, having more friction than it would have if the surface were completely smooth without notches, or without separations, thereby improving the rotation of the discs and therefore reducing slippage and drag. Furthermore, due to the separation between the notches and the geometry thereof, the resistant conditions of the disc are not affected and the ease of deterioration is not increased.

In this embodiment, the notches also provide an area for waste to be trapped and pinched along a sharp edge which improves the cutting of the waste.

Moreover, in a non-preferred embodiment, the flat agricultural disc comprises a second plurality of concave notches located on the second surface, distributed in the shape of a circular matrix, concentric to the disc, adjacent to the perimeter edge. Preferably, these notches are arranged such that they do not coincide with the ones on the first surface, in other words, they meet where the separations of the first surface are located, but on the opposite surface. In this manner, it is possible to increase the frictional capacity of the disc on the soil by having more notches around the perimeter, but the resistive capacity thereof is not reduced since the notches are located in an alternating manner on each flat surface of the disc.

These notches of the second plurality of notches may be the same or different from the first plurality of notches, in other words, they may have the same or different shape, size and orientation, and there may be the same or different number thereof.

In one embodiment, the flat agricultural disc also comprises a second bevel located on the first surface of the disc, in the cutting circular perimeter edge, which enables an oriented configuration to be had in order to cut through the most difficult waste and penetrate deep into the soil, but limits the size of the concave surfaces of the notches.

In another different embodiment, the agricultural disc comprises a curved shape, such that said disc is preferably configured for tillage and clearing of farmland. In other words, this type of agricultural disc comprises at least one curved segment, in addition to the one generated by the notches, not being completely flat, such as in the previous embodiment, and is used to prepare the land, turn it, aerate it, clear it and clean it. This is due to the fact that, once it is harvested, the land must be treated, removing and cutting waste from said harvest. In this manner, these curved agricultural discs with notches enable a less rough surface to be obtained, preventing skidding with the ground to be turned and cleared and increase the useful life of said disc.

In a more specific embodiment, the agricultural disc comprising a curved shape has a shape selected from the group consisting of:
- curved frustoconical shape;
- completely curved shape;
- curved shape with a projection; and
- curved shape with a plate;
comprising the first surface curved towards the inside and the second surface curved towards the outside.

A completely curved shape means that it comprises the first surface as completely concave and curved and the second surface as convex and curved, while if it has a projection or plate it means that the agricultural disc comprises a flat segment, next to the edge or in the centre, in addition to a curved segment.

The difference between a frustoconical shape and a completely curved shape, with or without a projection or plate, is that the revolving element which generates the curved shape by rotating with respect to the axis of the disc is a straight line in the frustoconical shape and a curved line in the curved shape.

In one embodiment, the agricultural disc comprises a fastening system in a central portion, which in a preferred embodiment may comprise a through hole, preferably circular, located in the centre of the disc, through which a supporting shaft is connected, at least two through bores surrounding the centre of the disc, which perform the fastening between said disc and the structure to which it is joined, or a combination of the above.

In one embodiment, the agricultural disc comprises a first bevel located on the second surface adjacent to the perimeter edge, such that it comprises a blade smaller than the thickness thereof, determined by the angle of inclination of said bevel. Said blade facilitates the insertion or penetration of the agricultural disc in the farmland, if the disc is flat, or the cutting, turning and clearing of the waste, if the disc comprises a curved shape. This blade enables speeds to be increased in conventional agriculture and enables them to be more versatile in zero tillage applications, taking into account that an extremely sharp edge can break or be damaged, but one that is too blunt will not penetrate the soil or properly cut through debris.

In a preferred embodiment, this second surface is completely smooth, whether the agricultural disc is flat or curved, with the exception of the first bevel, in other words, it does not comprise any notches, slits or projections on the perimeter edge on said second surface, since the fact that there are notches on the first one is enough to facilitate the rotation of the disc by friction, and thus prevents having an edge with too many weak areas.

In one embodiment, each of the notches comprises a cylindrical curved area, each of said notches comprising a constant radial cross section. In other words, all the notches of the agricultural disc are equal in size and shape, and they comprise the same cross section along the radius of the disc.

In another preferred embodiment, each of the notches comprises a conical curved area, with a cross section having a variable radius decreasing from the perimeter edge to a centre of the disc, said perimeter edge comprising a scalloped circular shape.

In another embodiment, each of the notches comprises a cylindrical curved area, adjacent to the perimeter edge, oriented in the radial direction of the disc, each of said notches comprising a constant radial cross section, and a conical curved area, continuous to the cylindrical curved area, with a cross section having a variable radius decreasing from said cylindrical curved area to a centre of the disc.

In the event that the notches have cylindrical or conical curved areas adjacent to the perimeter edge, and depending in that case on the conicity of said curves, or if the disc comprises a very pronounced bevel on any of the surfaces, the contour may comprise a scalloped edge, in other words, with notches, which facilitates the grip of the disc on the cultivation surface to be treated; however, said curves will be not very deep, in order to maintain a smooth seed bed, in the embodiment of the flat agricultural disc.

Whether the notches have a cylindrical, conical, or combined area, in one embodiment, each of them comprise a straight axis of revolution of the curved area, said axis comprising a radial direction of the disc, with all the axes of each notch coinciding in one central point of the disc. In other words, all the notches have a radial orientation of the disc.

These axes are useful for explaining the orientation of the notches, since if they have a conical or cylindrical area, they must be defined by an axis.

In another embodiment, each of the notches comprises a straight axis of revolution of the curved area, wherein said axis comprises a direction inclined at an angle comprised between 0 and 45° with respect to a radial direction of the disc, of each of the notches. Preferably, said inclination is 36°.

In other words, instead of all the axes of the notches pointing to the same point, in the centre of the agricultural disc, all the axes are inclined at one same angle with respect to the radial direction. In fact, this inclination is configured to make the entrance of the notch into the soil as perpendicular as possible. The inclination is determined by the size of the disc, the notch, and the desired depth of the opening.

In another embodiment, the notches comprise a curved axis of revolution of the curved area. In this case, the areas of the notches do not have a straight orientation, but rather comprise a curved shape, like a quotation mark, adjusted to the entrance of the notches into the soil, said curved shape being adjusted to the direction of the entrance of the notch into the soil, when the disc is rotating.

In another embodiment, the disc is made of a boron steel alloy due to the structural conditions it has as well as the resistance thereof to deterioration in agricultural uses.

In one embodiment, the agricultural disc comprises a diameter comprised between 250 and 914 mm, a thickness comprised between 1.5 and 16 mm, a bevel width comprised between 5 and 25 mm, and a blade thickness of the cutting circular perimeter edge comprised between 0.4 and 12 mm. These values are determined based on the use of the agricultural disc as well as the conditions of the terrain to be treated.

Typically, the blade will have a thickness of between 25 and 75% of the thickness of the disc, with the blade preferably having a thickness of half the thickness of the disc.

In one embodiment, the first plurality of notches comprises a number of notches comprised between 6 and 50, preferably between 17 and 30.

In one embodiment, the notches comprise a length measured from the perimeter edge towards the inside of the disc comprised between 10 and 100 mm, and an arc length measured on the perimeter edge comprised between 5 and 50 mm. On the other hand, the size of the separation between each notch comprises an arc length comprised between 15 and 180 mm, depending on the previously defined parameters.

The size of the notches depends on the degree of dragging or cutting which is desired for the disc and the wear to which it is subjected, such that the length of the notches is determined to be slightly longer than the amount at which these discs are normally replaced.

Furthermore, larger notches, in other words ones that are wider, longer and/or deeper, provide more traction to rotate the disc and more waste cutting action in exchange for a faster wear rate and a less consistent seed furrow bottom in the trench.

The measurements of the disc, the number of notches and the size thereof, as well as the size of the separation thereof are linked and depend on the dragging or cutting conditions to be obtained, depending on the parameters of the soil and the depth of cut required. The relationship sought between these parameters is that, with the disc partially inserted into the terrain in the use position, there is always at least one notch in contact with the soil, so that a suitable grip is produced, stronger than the one that the disc would have if it did not have notches.

Preferably, the arc lengths, measured on the perimeter edge, of the plurality of notches is less than 50% of the perimeter edge of the disc, said lengths preferably being between 25 to 50% of the perimeter edge.

This means that the perimeter of the disc only has notches on a maximum of 50% of the length thereof, leaving the rest, another 50%, without notches, with flat spaces. This is because excess notches structurally weaken the disc.

The invention also comprises the process for manufacturing an agricultural disc, as defined in any of the previous embodiments, for use in agricultural work, comprising two surfaces and a cutting circular perimeter edge, comprising the following steps:
a) creating a plurality of undulations, in a flat circular disc, in the shape of a circular matrix concentric to said disc, said undulations being adjacent to the perimeter edge and said undulations being spaced by smooth separations, generating an undulated contour on both surfaces, comprising crests on a second surface and valleys on a first surface.
b) shaving, by means of a machining procedure for removing shavings, the crests of the undulations generated on the second surface.

The undulations spaced apart by separations have a shape similar to a stream of dynamic undulations, said undulations not being continuous but rather being separated by non-undulated portions, in other words, portions that have not undergone deformation with respect to the rest of the disc. Furthermore, the crests of the undulations created must not have a height greater than the thickness of the disc, so that no openings are generated in the disc when said crests are shaved down.

In one embodiment, the manufacturing process comprises a step, before the previous ones, of die-cutting a flat metal sheet in order to obtain the flat circular disc.

In one embodiment, the step of creating the plurality of undulations is performed by means of a plastic forming of the circular disc, through a pattern comprising undulations, preferably in a cold forming.

In one embodiment, the process comprises a step of machining, by shaving removal, a first bevel on the perimeter edge of the second surface of the circular disc, sharpening it.

If more sharpening is required, in one embodiment, the process comprises a step of machining a bevel on the perimeter edge of the first surface of the circular disc.

In one embodiment, the process comprises a step of drilling a central portion of the disc generating a through hole, which can be used as a fastening support or a means of joining to an external element.

In one embodiment, if a curved agricultural disc is desired, the process comprises a hot forming step in order to give a curvature to the circular disc after the step of creating the plurality of undulations.

In one embodiment, the process comprises a last step of integrally hardening the disc by means of a thermal tempering process which improves the structural and wear-resistant conditions of the disc.

The notches produced in this method are more effective than other methods currently on the market.

### BRIEF DESCRIPTION OF THE DRAWINGS

With the intention of helping to better understand the system developed and in relation to a practical and preferred exemplary embodiment thereof, a series of drawings is offered where the following has been represented:
Figure 1a shows a perspective view of a circular disc, in this case being a flat disc, in a step after the creation of the plurality of undulations adjacent to the perimeter edge and before the step of shaving the crests of the undulations, seen from the second surface.
Figure 1b shows a perspective view of the circular disc shown in figure 1a, seen from the first surface.
Figure 2a shows a front view, seen from the first flat surface, of the circular disc shown in figure 1a.
Figure 2b shows a side view of the circular disc shown in figure 1a, with undulations on the outer circular perimeter edge thereof.
Figure 2c shows a lateral detail view of an undulation of the circular disc wherein the crest and valley of said undulation can be seen.
Figure 2d shows a front detail view of an undulation of the circular disc, wherein a conical shape of said undulations can be seen.
Figure 3a shows a perspective view of an agricultural disc with flat surfaces, seen from the second surface, wherein the scalloped perimeter edge, the fastening system, as well as the bevel of said second surface can be seen.
Figure 3b shows a perspective view of the disc shown in the previous figure 3a, seen from the first surface, wherein the plurality of notches with a conical shape can be seen, as well as the circular matrix distribution thereof along the perimeter edge of the disc.
Figure 4a shows a perspective view of a flat agricultural disc, seen from the second surface, wherein the scalloped perimeter edge as well as the bevel can be seen.
Figure 4b shows a perspective view of the agricultural disc shown in figure 4a, seen from the first surface, wherein the plurality of notches with a conical shape can be seen, as well as the distribution thereof along the perimeter edge of the disc, wherein the notches have a smaller width and there are fewer of them than in the disc shown in figure 3b.
Figure 5a shows a front view of a flat agricultural disc, seen from the first surface, with notches comprising a conical curved area on the perimeter edge thereof, the straight axis of revolution of said curved area being inclined with respect to the direction of the radius of the disc.
Figure 5b shows a front view of a flat agricultural disc, seen from the first surface, with notches comprising a cylindrical curved area on the perimeter edge thereof, the straight axis of revolution of said curved area being inclined with respect to the direction of the radius of said disc.
Figure 6a shows a front view of a circular disc, in this case being for a curved agricultural disc with a plate in an internal portion, in a step after the creation of the plurality of undulations adjacent to the perimeter edge, in a step before the step of shaving the crests of the undulations and before the formation of the curvature, seen from the second surface.
Figure 6b shows a rear view of the circular disc shown in figure 6a, seen from the first surface, wherein the valleys of the undulations created can be seen.
Figure 7a shows a perspective of a curved agricultural disc with a plate, seen from the second surface, wherein the scalloped perimeter edge as well as the bevel of said second surface can be seen.
Figure 7b shows a perspective view of the curved agricultural disc with a plate, shown in previous figure 7a, seen from the first surface, where the plurality of notches can be seen, each one comprising a cylindrical curved area and a conical curved area, continuous to the cylindrical curved area, as well as the circular matrix distribution thereof along the perimeter edge of the disc.
Figure 7c shows a side view of the agricultural disc shown in figure 7a, wherein the curvature of the disc, the bevel of the second surface and the perimeter edge can be seen.

### PREFERRED EMBODIMENT OF THE INVENTION

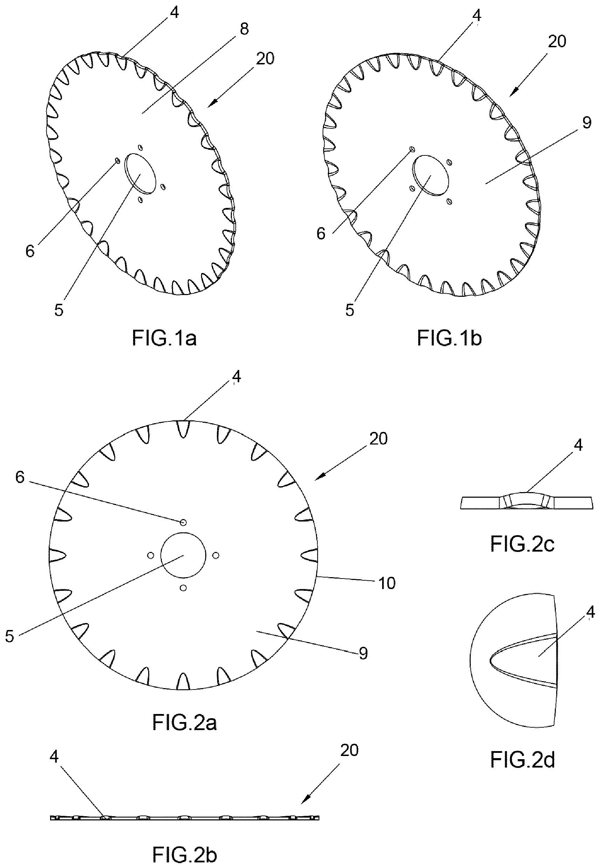

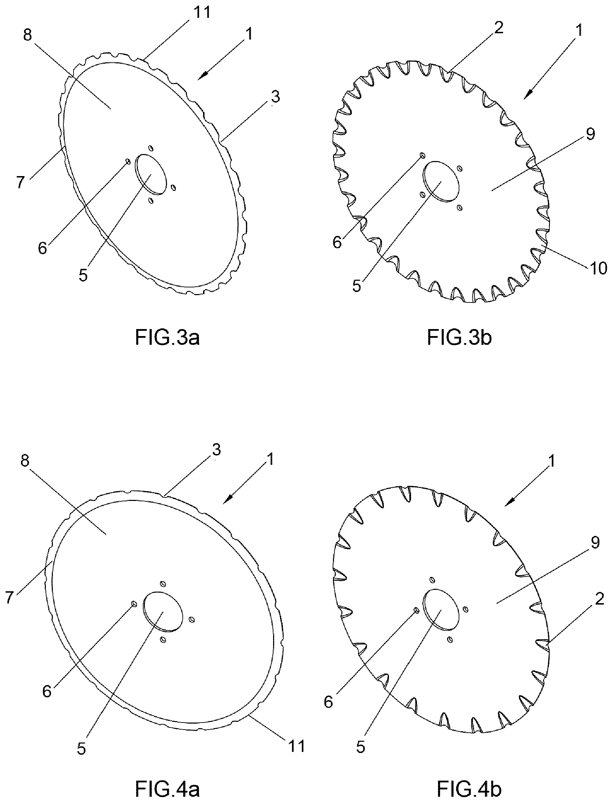

The preferred embodiment of the invention comprises both the process for manufacturing an agricultural disc (1), starting from a circular disc (20), showing in some of the intermediate steps thereof in figures 1a-1b, 2a-2d and 6a-6b, as well as the agricultural disc (1) itself shown in figures 3 to 5 and 7, from different perspectives and configurations.

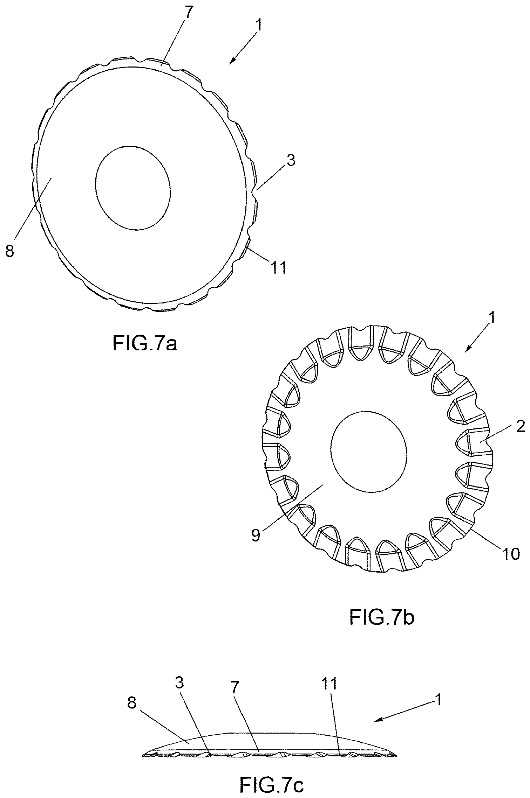

Among the agricultural discs (1), two types stand out, the flat agricultural discs (1) shown in figures 3 to 5, generated from a flat circular disc (20) as shown in figures 1 and 2, and curved agricultural discs (1), such as those shown in figures 7a-7c, these being specifically curved with a plate, generated from a flat circular disc (20) which has been curved in a step of the forming manufacturing process.

Figures 1a-1b and 2a-2d show a circular disc (20), for manufacturing a flat agricultural disc (1), in one of the steps of the manufacturing process, the circular disc (20) having been obtained with the two flat surfaces (8, 9) thereof, by die-cutting a metal sheet, as if it were a cylinder with a reduced thickness compared to the radius thereof, and having applied a plastic deformation to it in the shape of conical undulations (4), along the entire perimeter of the circular disc (20), said undulations (4) being adjacent to the perimeter edge (11).

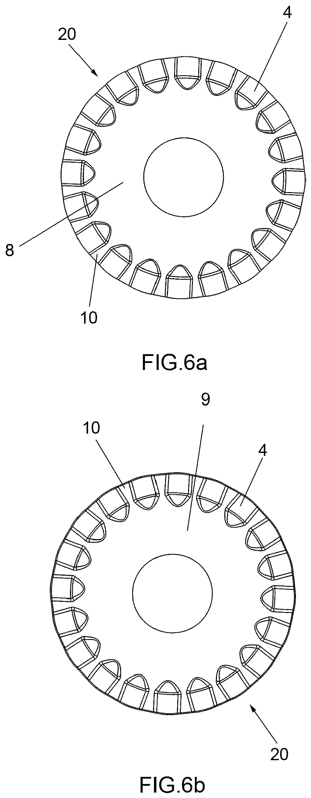

Moreover, figures 6a-6b show a circular disc (20), for manufacturing a curved agricultural disc (1), to which a plastic deformation has been applied in the shape of undulations (4), in this case with a combined cylindrical-conical shape, along the entire perimeter of the circular disc (20), said undulations (4) being adjacent to the perimeter edge (11).

In this situation, for both types of circular discs (20), whether they are intended for manufacturing flat or curved agricultural discs, on the first surface (9), the undulations (4) look like valleys spaced by flat separations (10), while on the second surface (8), the undulations look like small crests spaced by the same flat separations (10).

Once the plurality of undulations (4) has been created in the circular disc (20), a shaving is performed by means of a machining process via milling or lathing, which removes the crests of the undulations (4), smoothing the second surface (8) of the circular disc (20), while the first surface (9) continues to have notches (2) with the shape of the valleys of the undulations (4) which were created previously, turning it into a flat agricultural disc (1).

The manufacturing of the curved agricultural disc (1) comprises an additional hot forming step which enables the curvature to be provided to the agricultural disc (1), the curved agricultural disc (1) comprising a first surface (9) curved inwards, practically concave if it were not for the plate comprising a flat segment, and a second surface (8) curved outwards, practically convex, also if it were not for the plate, and also comprises a reduced thickness compared to the radius thereof.

In this manner, the agricultural disc (1) is left with a first plurality of notches (2) on the first surface (9), as shown in figures 3b, 4b, 5a-5b, for flat agricultural discs (1), and completely smooth on the second surface (8), while for curved agricultural discs (1), it also comprises a first plurality of notches (2) on the first surface (9), as shown in figure 7b, and they are smoothed on the second surface (8).

Preferably, the process for manufacturing the agricultural disc (1) comprises the step consisting of making, by means of machining for removing shavings, a first bevel (7) along the perimeter edge (11) of said disc (1), on the second surface (8), thus remaining as shown in any of figures 3a and 4a for flat discs (1) and as shown in figures 7a and 7c, for curved discs (1).

The agricultural disc (1) shown in figures 3a-5b also has a through hole (5) in the centre and four through bores (6) surrounding it, comprising the means for fastening said disc (1) to a drive machine. Both the through hole (5) and the through bores (6) are made by means of machining processes for removing shavings such as drilling or by die-cutting.

One step after the shaving of the crests of the undulations (4), and if it has been performed, also after the hole (5) and the through bores (6) have been made, consists of applying a thermal tempering treatment to the machined product, providing conditions of structural resistance and resistance to deterioration which are suitable for using the agricultural disc (1).

Once all the steps of the manufacturing process have been performed, an agricultural disc (1) like the one shown in figures 3a-5b and 7a-7c is obtained.

Said disc (1) comprises a circular shape and a plurality of notches (2) separated by a plurality of smooth separations (10), arranged in an alternating manner, in other words, each notch (2) is followed by a separation (10), said notches located on the first surface (9), such that said notches (2) are distributed in the shape of a circular matrix, concentric to the disc itself (1), being adjacent to the perimeter edge (11).

In figures 3b and 4b, said notches (2) have a conical shape, with the ones shown in figure 3b being more conical than the ones in figure 4b.

This conicity implies that the perimeter edge (11) of the disc (1) is scalloped or undulated, in other words, that it comprises curved indentations (3) along the contour or edge thereof. The greater the conicity of the conical notches (2), the greater the undulations generated in the perimeter edge (11) will be.

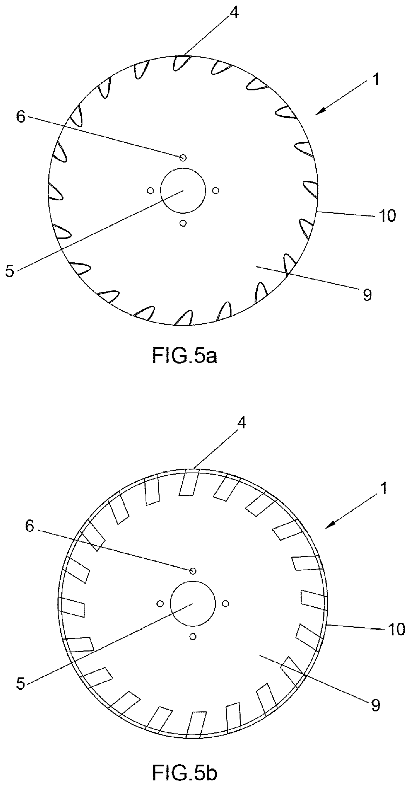

In a non-preferred embodiment, the notches (2) have a cylindrical shape, as shown in figure 5b, wherein no scalloping or indentations (3) are seen, the notches only being visible from the first surface (9).

In the preferred embodiment of the curved discs (1), the notches (2) are like the ones shown in figure 7b, comprising a cylindrical area and a conical area after the cylindrical area.

The notches (2) do not have straight edges but are undulated, due to the forming manufacturing process with which they are made, and can have a straight orientation, as shown in figures 3b, 4b, and 7b, wherein the axis of revolution of the curved surface has a radial direction of the disc (1), all the axes of each notch (2) coinciding in one central point of said disc (1), or they can have an inclined orientation with respect to said radial direction, as shown in figures 5a-5b, wherein the axis of the curved area of each notch (2) is inclined 36° with respect to a radial direction, being a non-preferred embodiment.

On the second surface (8), shown in figures 3a, 4a, 7a, and 7c, a bevel (7) can be seen which provides a blade to the perimeter edge (11) of the disc (1). Said bevel (7) is only preferably made on said second surface (8) but it can be made, in a non-preferable manner, also on the first surface (9) in flat agricultural discs (1).

The agricultural disc (1) is made of high-strength steel, preferably from a boron steel alloy.

## Claims

1. An agricultural disc (1) for use in agricultural work, comprising two surfaces (8, 9) and a cutting circular perimeter edge (11), **characterised in that** it comprises:
- a first plurality of concave notches (2) located on a first surface (9) of said agricultural disc (1), distributed in a circular matrix shape concentric to said agricultural disc (1), adjacent to the perimeter edge (11);
wherein the first plurality of notches (2) is spaced by smooth separations (10) located on the perimeter edge (11).

2. The agricultural disc (1) according to claim 1, comprising a flat shape, the two surfaces (8, 9) being flat and parallel, said agricultural disc (1) being configured to open furrows in soil.

3. The agricultural disc (1), according to claim 2, comprising a second plurality of concave notches (2) located on a second surface (8) distributed in a circular matrix shape concentric to the agricultural disc (1), adjacent to the perimeter edge (11).

4. The agricultural disc (1) according to any of claims 2 or 3, comprising a second bevel located on the first surface (9), on the perimeter edge (11).

5. The agricultural disc (1) according to claim 1, comprising a curved shape and which is configured for the tillage and clearing of farmland.

6. The agricultural disc (1), according to the preceding claim, comprising a shape selected from the group consisting of:
- curved frustoconical shape;
- completely curved shape;
- curved shape with a projection; and
- curved shape with a plate;
wherein the first surface (9) is curved towards the inside and the second surface (8) is curved towards the outside.

7. The agricultural disc (1) according to any of the preceding claims, comprising a fastening system (5, 6) in a central portion of the agricultural disc (1).

8. The agricultural disc (1), according to the preceding claim, wherein the fastening system (5, 6) of the central portion of the agricultural disc (1) comprises at least one opening selected from the group consisting of:
- a through hole (5) located in a centre of the agricultural disc (1);
- two or more through bores (6) in a circular matrix arrangement with respect to the centre of the agricultural disc (1); and
- a combination of the above.

9. The agricultural disc (1) according to any of the preceding claims, comprising a first bevel (7) located on a second surface (8) of the agricultural disc (1) and adjacent to the perimeter edge (11).

10. The agricultural disc (1), according to any of the preceding claims, wherein each of the notches (2) comprises a cylindrical curved area, each of said notches (2) comprising a constant radial cross section.

11. The agricultural disc (1), according to any of the preceding claims 1 to 9, wherein each of the notches (2) comprises a conical curved area, with a cross section having a variable radius decreasing from the perimeter edge (11) to a centre of the agricultural disc (1), said perimeter edge (11) comprising a scalloped circular shape.

12. The agricultural disc (1), according to any of the preceding claims 1 to 9, wherein each of the notches (2) comprises:
- a cylindrical curved area, adjacent to the perimeter edge (11), oriented in the radial direction of the agricultural disc (1), each of said notches (2) comprising a constant radial cross section, and
- a conical curved area, continuous to the cylindrical curved area, with a cross section having a variable radius decreasing from said cylindrical curved area to a centre of the disc (1);
the perimeter edge (11) comprising a scalloped circular shape.

13. The agricultural disc (1), according to any of claims 10 to 12, wherein each of the notches (2) comprises a straight axis of revolution of the curved area, wherein said axis comprises a radial direction of the agricultural disc (1), all the axes of each notch (2) of a face (8, 9) coinciding in one central point of the agricultural disc (1).

14. The agricultural disc (1), according to any of claims 9 to 11, wherein each of the notches (2) comprises a straight axis of revolution of the curved area, wherein said axis comprises a direction inclined at an angle comprised between 0 and 45° with respect to a radial direction of the agricultural disc (1), of each of the notches (2).

15. The agricultural disc (1) according to any of claims 8 to 10, wherein the notches (2) comprise a curved axis of revolution of the curved area.

16. The agricultural disc (1), according to any of the preceding claims, comprising a diameter comprised between 250 and 914 mm, a thickness comprised between 1.5 and 16 mm, a bevel width comprised between 5 and 25 mm, and a blade thickness of the cutting circular perimeter edge (11) comprised between 0.4 and 12 mm.

17. The agricultural disc (1), according to any of the preceding claims, wherein the first plurality of notches (2) comprises between 6 and 50 notches, preferably between 17 and 30 notches.

18. The agricultural disc (1), according to any of the preceding claims, wherein the notches (2) comprise a length measured from the perimeter edge (11) towards the inside of the disc comprised between 10 and 100 mm, and an arc length measured on the perimeter edge (11) comprised between 5 and 50 mm and, wherein the size of the separation (10) between each notch (2) comprises an arc length comprised between 15 and 180 mm.

19. The agricultural disc (1), according to the preceding claim, wherein the arc lengths measured on the perimeter edge (11) of all the notches (2) of a face (8, 9) are less than 50% of the entire length of the perimeter edge (11) of the agricultural disc (1), preferably said lengths comprise between 25 to 50% of the perimeter edge (11).

20. A process for manufacturing an agricultural disc (1) for use in agricultural work, comprising two surfaces (8, 9) and a cutting circular perimeter edge (11), like the one defined in any of the preceding claims, comprising the following steps:
a) creating a plurality of undulations (4), in a flat circular disc (20), in a circular matrix shape concentric to said disc (20), said undulations (4) being adjacent to the perimeter edge (11) and spaced by smooth separations (10), generating an undulated contour on both surfaces (8, 9), comprising crests on a second surface (8) and valleys on a first surface (9); and
b) shaving, by means of a machining procedure for removing shavings, the crests of the undulations (4) generated on the second surface (8).

21. The process for manufacturing an agricultural disc (1), according to the preceding claim, comprising a step of die-cutting a flat metal sheet in order to obtain the flat circular disc (20), before creating the undulations (4).

22. The process for manufacturing an agricultural disc (1), according to any of claims 20 to 21, wherein the step of creating the plurality of undulations (4) is performed by means of the plastic forming of the circular disc (20), through a pattern comprising undulations, preferably in a cold forming.

23. The process for manufacturing an agricultural disc (1), according to any of claims 19 to 21, comprising a step of machining a first bevel (7) on the perimeter edge (11) of the second surface (8) of the circular disc (20) by means of a process for removing shavings.

24. The process for manufacturing an agricultural disc (1), according to any of the preceding claims, comprising a hot forming step in order to give a curvature to the circular disc (20) after the step of creating the plurality of undulations (4).

25. The process for manufacturing an agricultural disc (1), according to any of claims 19 to 22, comprising a last step of integrally hardening the circular disc (20) by means of a thermal tempering process.
